(19) Europäisches Patentamt
European Patent Office
Office européen des brevets

(11) **EP 2 918 056 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **13788938.2**

(22) Anmeldetag: **04.11.2013**

(51) Int Cl.:
*H04L 1/00* (2006.01)    *G06F 13/40* (2006.01)
*G06F 13/362* (2006.01)

(86) Internationale Anmeldenummer:
**PCT/EP2013/072903**

(87) Internationale Veröffentlichungsnummer:
**WO 2014/072240 (15.05.2014 Gazette 2014/20)**

(54) **PARALLELER BETRIEB EINES BUSSYSTEMS MIT EINEM CAN-BUSSYSTEM MIT EINER EINRICHTUNG ZU KOMPENSATION VON STÖRUNGSINTERFERENZEN**

PARALLEL OPERATION OF BUS SYSTEM WITH A CAN-BUS SYSTEM WITH AN INTERFERENCE COMPENSATION UNIT

OPÉRATION PARALLELE D'UN SYSTÈME DE BUS AVEC UN SYSTÈME DE BUS DE TYPE CAN AVEC UNE UNITÉ DE COMPENSATION DES INTERFÉRENCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 DE 102012220493**

(43) Veröffentlichungstag der Anmeldung:
**16.09.2015 Patentblatt 2015/38**

(73) Patentinhaber: **Robert Bosch GmbH 70442 Stuttgart (DE)**

(72) Erfinder: **NICKEL, Patrick 63633 Birstein (DE)**

(56) Entgegenhaltungen:
**WO-A1-2012/038472    DE-A1- 10 301 637**

EP 2 918 056 B1

**Beschreibung**

Technisches Gebiet

Die vorliegende Erfindung betrifft eine Teilnehmerstation zum Anschluss an eine Busleitung und ein Verfahren zur Kompensation einer Störung aufgrund eines CAN-Bussystems in einem Empfangssignal.

Stand der Technik

In Kraftfahrzeugen, Krankenhäusern usw. hat sich derzeit das CAN-Bussystem als günstiges Standard-Bussystem etabliert. In diesem werden Nachrichten bzw. Signale gemäß der CAN-Spezifikation in der ISO11898 zwischen Teilnehmerstationen übertragen, die auch Knoten genannt werden. Die Teilnehmerstationen sind beispielsweise Steuergeräte oder Anzeigevorrichtungen eines Kraftfahrzeugs, usw.

Zur Ermöglichung hoher Datenraten in z. B. Architekturen von Kraftfahrzeug-Steuergeräten wird derzeit die Einführung neuer hochratiger Bussysteme vollzogen. Hierbei werden vielmals Netzabschnitte auf Basis unterschiedlicher Systeme aufgebaut, wobei beispielsweise LIN, CAN, FlexRay, Ethernet, usw. zum Einsatz kommen. Jedes Bussystem verwendet hierbei eine eigene Verbindungstopologie in Form von dedizierten Leitungen zwischen den entsprechenden Busteilnehmern.

Es wäre wünschenswert, wenn ein zweites Bussystem, das insbesondere zur hochratigen Übertragung von Daten geeignet ist, so ausgelegt werden könnte, dass es auf dem gleichen Kabel parallel zu einem bestehenden CAN-Bus, dem ersten Bussystem, betrieben werden kann. Dies fordert eine unabhängige Koexistenz des CAN-Systems und des zweiten Bussystems, also beider Systeme.

Eine Erweiterung von bestehenden Kommunikations-Netzwerken auf Basis existierender Standards um weitere Sende- und Empfangseinrichtungen durch Nutzung separater Kanäle wird beispielsweise in der DE 103 01 637 A1 behandelt.

WO 2012/038472 A1 offenbart ein Verfahren zum Übertragen von Daten zwischen Teilnehmerstation eines Bussystems, sowie eine solche Teilnehmerstation, wobei Daten über einen ersten Kanal und einen zweiten Kanal übertragen werden und das auf dem zweiten Kanal übertragene Signal auch abhängig von den auf dem ersten Kanal übertragenen Daten ist.

Bei Untersuchungen hat sich gezeigt, dass eine Auslegung zweier Systeme auf unterschiedliche Frequenzbereiche alleine für eine Koexistenz nicht ausreicht, solange der CAN-Bus, als eines der beiden Systeme, dominante und rezessive Bitzustände mit unterschiedlicher Impedanz mittels üblicher Sende-/Empfangseinrichtungen, die auch Transceiver genannt werden, auf den Bus einkoppelt. Eine solche Technik ist jedoch Grundlage des CAN-Übertragungsmechanismus einschließlich der Arbitrierung. Eine Änderung dessen würde zu stark in die Systemeigenschaften des CAN-Übertragungsmechanismus eingreifen.

Problematisch ist, dass ein Wechsel der Busimpedanz entsprechend dem Ausgangszustand des CAN-Transceivers ein als nicht mehr statisch annehmbares Übertragungsmedium bewirkt. Ein Wechsel kann als zeitveränderliche Knotenimpedanz der CAN-Knoten modelliert werden. Hinzu kommt, dass diese Impedanzen im Allgemeinen frequenzabhängig sind.

Zusätzlich zu diesem Impedanzeffekt besteht Interferenz für das zweite Bussystem in Form von Oberwellen der CAN-Übertragung auf der Busleitung. Die Leistungsdichte der Oberwellen fällt jedoch zu höheren Frequenzen stark ab. Die Interferenz lässt sich durch geeignete Wahl des, insbesondere hochfrequenten, Spektrums und Auslegung der Sendeleistung des zweiten Bussystems in ein erträgliches Maß bringen. Dadurch entsteht jedoch das Problem, dass sich die nicht statische Busimpedanz in einer Multiplikation des, insbesondere hochfrequenten, Signals des zweiten Bussystems mit dem CAN-Signal äußert und in zusätzlichen Komponenten im Empfangssignal resultiert. Die Leistung dieser Anteile skaliert mit der Sendeleistung des zweiten Bussystems und führt deshalb zu einer inhärenten Störleistung, die proportional mit der Sendeleistung ansteigt. Dies kann dazu führen, dass ein Empfang unter üblichen Qualitätsanforderungen, insbesondere in Bezug auf einzuhaltende Fehlerraten, nicht mehr möglich ist.

Aus diesen Gründen ist eine Zusammenschaltung des CAN-Bussystems mit einem zweiten Bussystem ohne weitere Maßnahmen nur sehr eingeschränkt nutzbar.

Offenbarung der Erfindung

Daher ist es Aufgabe der vorliegenden Erfindung, eine Teilnehmerstation zum Anschluss an eine Busleitung und ein Verfahren zur Kompensation einer Störung aufgrund eines CAN-Bussystems in einem Empfangssignal bereitzustellen, welche die zuvor genannten Probleme lösen. Insbesondere soll eine Teilnehmerstation zum Anschluss an eine Busleitung und ein Verfahren zur Kompensation einer Störung aufgrund eines CAN-Bussystems in einem Empfangssignal bereitgestellt werden, welche Signale, die über eine Busleitung übertragen werden, die parallel für das CAN-Bussystem und ein weiteres Bussystem verwendet wird, mit guter Empfangsqualität empfangen können.

Die Aufgabe wird durch eine Teilnehmerstation zum Anschluss an eine Busleitung mit den Merkmalen des Anspruchs 1 gelöst. In Bezug auf die Teilnehmerstation kann mittels der Busleitung ein Signal eines CAN-Bussystems in Koexistenz zu einem Signal eines weiteren Bussystems übertragen werden. Die Teilnehmerstation umfasst eine Empfangseinheit zum Empfang eines Signals in Bezug auf das weitere Bussystem und zur Kompensation einer Störung in dem empfangenen Signal, die aufgrund einer wechselnden Ausgangsimpedanz einer an die Busleitung anschließbaren Teilnehmerstation des CAN-Bussystems entsteht.

Die Teilnehmerstation kann das in der Empfangseinrichtung empfangene Empfangssignal mittels Signalverarbeitung, insbesondere als Vorverarbeitung, so aufbereiten, dass die Einflüsse des CAN-Signals zu einem Großteil eliminiert werden. Als Besonderheit lässt sich dies als Vorverarbeitung mit vielen Übertragungsverfahren kombinieren.

Die Teilnehmerstation ermöglicht in Koexistenz zu einem CAN-Bussystem in einer bestehenden Topologie (Busverdrahtung) den Einsatz eines weiteren Bussystems mit hochratiger Übertragung bei Nutzung höherer Frequenzbereiche.

Mit der Teilnehmerstation ist eine effiziente Übertragung mit hochstufiger Symbolkonstellation möglich, auch wenn die wechselnde Ausgangsimpedanz einer parallel betriebenen CAN-Teilnehmerstation für übliche Übertragungsverfahren zu starken Störungen führt. Eine Kompensation des CAN-Signals wird in der Empfangseinrichtung des weiteren Bussystems durchgeführt und aufwandsgünstig als Vorverarbeitungsalgorithmus möglich.

Die Vorteile der Erfindung liegen somit in der Ermöglichung des unabhängigen parallelen Betriebs von CAN-Bussystem mit einem weiteren Bussystem auf gleicher Verdrahtung (und Topologie).

Vorteilhafte weitere Ausgestaltungen der Teilnehmerstation sind in den abhängigen Patentansprüchen angegeben.

Die Empfangseinheit kann umfassen: eine Taktschätzeinrichtung zur Schätzung des Zeittaktes eines CAN-Signals in dem von der Empfangseinheit (20) empfangenen Signal, eine Erfassungseinrichtung zur Erfassung der Zustände des CAN-Signals je Periode, eine Nachbildungseinrichtung zur Nachbildung des hypothetisch gesendeten CAN-Signals, eine Wertschätzeinrichtung zur Schätzung von Werten im Bereich des jeweiligen Zustands des CAN-Signals, eine Bestimmungseinrichtung zur Bestimmung von vorbestimmten Koeffizienten für das von der Empfangseinheit empfangene Signal, und eine Kompensationseinrichtung zur Kompensation des Anteils des CAN-Signals in dem Signal des weiteren Bussystems.

Es ist möglich, dass die Taktschätzeinrichtung zur Schätzung des Zeittaktes des CAN-Signals mittels Signal-angepasstem Filter (Matched-Filter) ausgestaltet ist. Hierbei kann anstelle des Signal-angepassten Filters ein Filter mit beliebiger Impulsantwort verwendet werden, welches zuvor mit einer an die Übertragung angepassten Impulsform voreingestellt wird. Alternativ kann hierbei das Signal-angepasste Filter zur Verwendung einer rechteckigen Impulsantwort oder einer geeigneten Impulsantwort wie z.B. die eines Cosinus-roll-off-Filters entsprechend der Symboldauer ausgestaltet sein, welche zuvor mit Standardwerten der verwendeten Impulsform voreingestellt wird. Das Signal-angepasste Filter kann auch über festgestellte Maxima und Minima innerhalb der Verarbeitung eines Nachrichtenblockes zur Festlegung eines Flankenmittelwerts und zur Verwendung der Schnittpunkte mit dem Ausgangssignal des Signal-angepassten Filters als zeitliche Referenzpunkte ausgestaltet sein.

Die Erfassungseinrichtung kann zur Erfassung der Zustände des CAN-Signals auf der Grundlage eines Ausgangssignals eines Signal-angepassten Filters und einer zeitlichen Lage der Wechsel der Zustände des CAN-Signals ausgestaltet sein.

Die zuvor beschriebene Teilnehmerstation kann Teil eines Systems sein, das zudem eine Busleitung und eine zweite Teilnehmerstation zum Senden von Signalen gemäß dem CAN-Protokoll auf die Busleitung aufweist. Hierbei ist die zuvor beschriebene Teilnehmerstation an die Busleitung angeschlossen.

Die zuvor genannte Aufgabe wird zudem durch ein Verfahren zur Kompensation einer Störung aufgrund eines CAN-Bussystems in einem Empfangssignal nach Patentanspruch 9 gelöst, wobei das CAN-Bussystem ein Signal in Koexistenz zu einem Signal eines weiteren Bussystems auf einer Busleitung überträgt. Das Verfahren umfasst die Schritte: Empfangen, mit einer Empfangseinheit, eines Signals in Bezug auf das weitere Bussystem, und Kompensieren einer Störung in dem bei dem Empfangsschritt empfangenen Signal, welche Störung aufgrund einer wechselnden Ausgangsimpedanz einer an die Busleitung angeschlossenen Teilnehmerstation des CAN-Bussystems entstehen.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Die vorliegende Erfindung ist ausschließlich durch die angehängten Ansprüche definiert und wird nur durch deren Umfang limitiert.

Alle im Folgenden diskutierten Ausgestaltungsformen, die nicht durch den Umfang der angehängten Ansprüche in vollem Umfang abgedeckt werden, sind als Beispiele anzuseher die zum besseren Verständnis der vorliegenden Erfindung beitragen.

Zeichnungen

Nachfolgend ist die Erfindung unter Bezugnahme auf die beiliegende Zeichnung und anhand von Ausführungsbeispielen näher beschrieben. Es zeigen:

Fig. 1 ein vereinfachtes Blockschaltbild eines Bussystems gemäß einem ersten Ausführungsbeispiel;

Fig. 2 ein elektrisches Ersatzschaltbild des Bussystems gemäß dem ersten Ausführungsbeispiel;

Fig. 3 ein weiteres elektrisches Ersatzschaltbild des Bussystems gemäß dem ersten Ausführungsbeispiel;

Fig. 4 ein Beispiel für einen Signalverlauf eines CAN-Sendesignals, welches über das Bussystem gemäß dem ersten Ausführungsbeispiel übertragen wird;

Fig. 5 ein Flussdiagramm eines Verfahrens gemäß dem ersten Ausführungsbeispiel, mit welchem eine Störung in einem Bussignal aufgrund eines CAN-Bussystems kompensiert werden kann; und

Fig. 6 ein weiteres Beispiel für einen Signalverlauf der Impulsantwort eines Cosinus-roll-off- Filters.

In den Figuren sind gleiche oder funktionsgleiche Elemente, sofern nichts anderes angegeben ist, mit denselben Bezugszeichen versehen.

Beschreibung der Ausführungsbeispiele

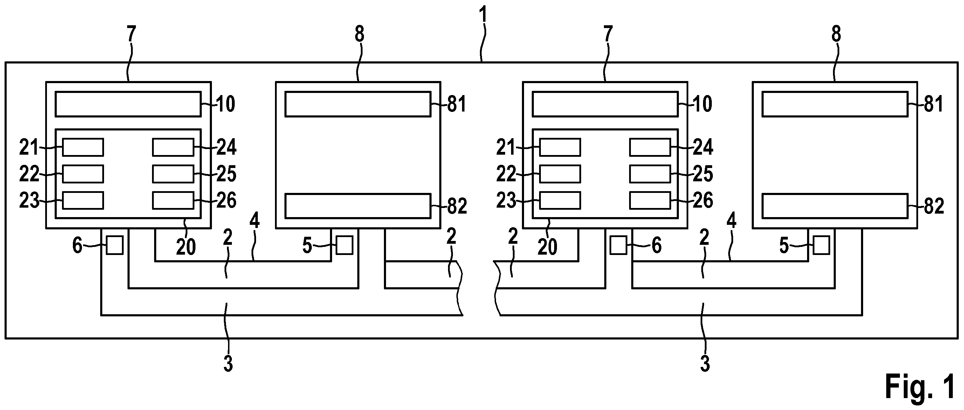

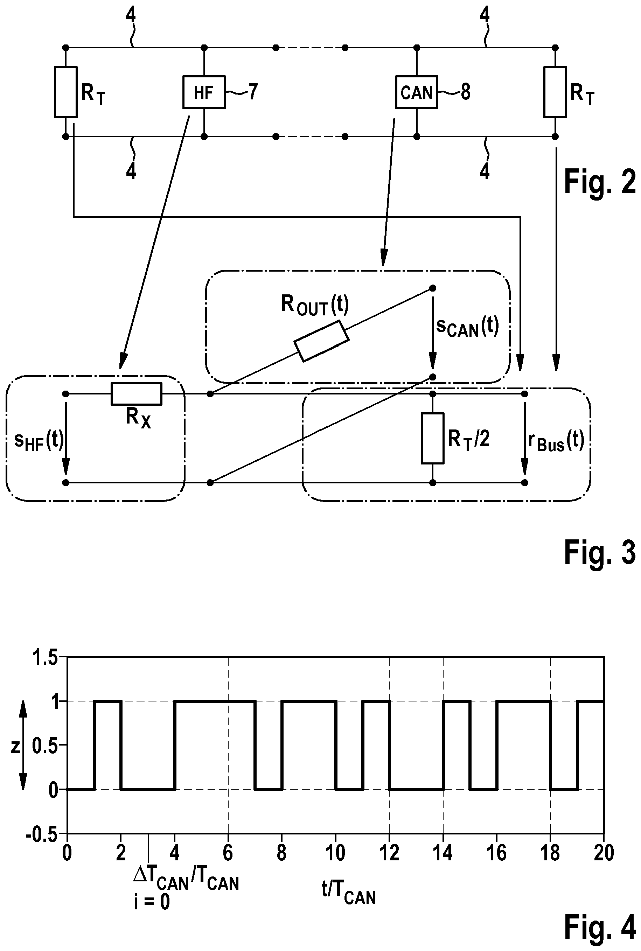

Fig. 1 zeigt ein System 1 mit einem Bussystem 2, das nachfolgend als CAN-Bussystem 2 bezeichnet ist, und einem weiteren Bussystem 3, die in einer gemeinsamen Busleitung 4 integriert sind. Das CAN-Bussystem 2 und das weitere Bussystem 3 können auch als Kanäle der gemeinsamen Busleitung 4 bezeichnet werden. Auf der Busleitung 4 werden Nachrichten in Form von Signalen 5, 6 an Teilnehmerstationen 7, 8 übertragen, die an die Busleitung 4 angeschlossen sind. Die Teilnehmerstationen 7 sind Teilnehmerstationen des weiteren Bussystems 3. Die Teilnehmerstationen 8 sind Teilnehmerstationen des CAN-Bussystems 2. In dem CAN-Bussystem 2 werden Nachrichten in Form der Signale 5 gemäß dem CAN-Protokoll übertragen, in dem weiteren Bussystem 3 werden Nachrichten in Form der Signale 6 übertragen. Die Signale 5, 6 beeinflussen sich gegenseitig, wie nachfolgend genauer beschrieben. Dennoch kann das CAN-Bussystem 2 parallel zu dem weiteren Bussystem 3, wie beispielsweise LIN, FlexRay, Ethernet, usw., auf der gemeinsamen Busleitung 4 betrieben werden.
Das System 1 kann in einem Fahrzeug, insbesondere einem Kraftfahrzeug, einem Flugzeug, usw., oder im Krankenhaus usw. Verwendung finden. Die Teilnehmerstationen 7, 8 können beispielsweise Steuergeräte oder Anzeigevorrichtungen eines Kraftfahrzeugs sein.
Wie in Fig. 1 gezeigt, umfassen die Teilnehmerstationen 7 jeweils eine Kommunikationssteuereinheit 10 und eine Empfangseinheit 20. Die Empfangseinheit 20 umfasst eine Taktschätzeinrichtung 21, eine Erfassungseinrichtung 22, eine Nachbildungseinrichtung 23, eine Wertschätzeinrichtung 24, eine Bestimmungseinrichtung 25, und eine Kompensationseinrichtung 26.
Die Teilnehmerstationen 8 in Fig. 1 umfassen jeweils eine Kommunikationssteuereinheit 81 und eine Empfangseinheit 82.
Die Empfangseinheit 20 kann eine Nachricht in Form des Signals 6 gemäß dem weiteren Bussystem 3 über die Busleitung 4 von einer weiteren
Teilnehmerstation 7 empfangen. Dieses Signal 6 wird dann von der Empfangseinheit 20 mit Hilfe ihrer Einrichtungen 21 bis 26 aufbereitet, wie nachfolgend am Beispiel eines einfachen Systemmodells beschrieben, das in Fig. 2 und Fig. 3 dargestellt ist.
Wie in Fig. 2 gezeigt, wird angenommen, dass je Bussystem 2, 3 eine Teilnehmerstation, die auch Knoten genannt werden kann, auf die beidseitig terminierte Busleitung 4 angeschaltet ist. Hierbei steht in Fig. 2 "HF" für eine Teilnehmerstation 7 und "CAN" für eine Teilnehmerstation 8. Die Ausdehnung der Busleitung 4 und eine Symmetrisierung werden in einer weiteren Modellierung vernachlässigt, die in Fig. 3 gezeigt ist. Demzufolge kann die Terminierung der Busleitung 4 mit Anschlusswiderstand $R_T$ an beiden Enden zu einem Widerstand mit einem Wert $R_T/2$ zusammengefasst werden.
Wie in Fig. 3 gezeigt, wird für das weitere Bussystem 3 angenommen, dass ein (Spannungs-)Signal $s_{HF}(t)$ über einen Widerstand $R_X$ auf die Busleitung 4 in das weitere Bussystem 3 eingekoppelt wird. Der CAN-Knoten bzw. die Teilnehmerstation 8 wird im Wesentlichen durch das (Spannungs-)Signal $s_{CAN}(t)$ und zeitveränderlichen Innenwiderstand $R_{OUT}(t)$ modelliert, welches sich mit dem Signal der Teilnehmerstation 7 im (Spannungs-)Empfangssignal $r_{Bus}(t)$ überlagert. Die zeitveränderliche Impedanz $R_{OUT}(t)$ entsteht durch die wechselnde Ausgangsimpedanz einer Teilnehmerstation 8 des CAN-Bussystems 2. Die wechselnde Ausgangsimpedanz der Teilnehmerstation 8 kann auch als zeitveränderliche Impedanz $R_{OUT}(t)$ bezeichnet werden.

Somit ergibt sich folgende Beschreibung für ein resultierendes Signal auf der Busleitung 4, welches Signal bei der Empfangseinrichtung 20 als Empfangssignal $r_{Bus}(t)$ empfangen wird:

$$r_{Bus}(t) = s_{CAN}(t) \times (R_T/2 \| R_X) / (R_{OUT}(t) + R_T/2 \| R_X)$$
$$+ s_{HF}(t) \times (R_T/2 \| R_{OUT}(t)) / (R_X + R_T/2 \| R_{OUT}(t)) \qquad \ldots(1)$$

Demzufolge enthält das Empfangssignal $r_{Bus}(t)$ neben Komponenten von $s_{CAN}(t)$ und $s_{HF}(t)$ auch eine Komponente $s_{CAN}(t) \times s_{HF}(t)$. Der Grund dafür liegt darin, dass $R_{OUT}(t) \approx \alpha \, s_{CAN}(t) + \beta$ gilt, wobei $\alpha$ für die Konstante steht, mit der sich der Innenwiderstand proportional zum CAN-Signal ändert und $\beta$ ein zusätzlicher Bias repräsentiert. In realen Systemen gilt oft $\alpha \gg R_T/2 \, / \, \max\{s_{CAN}(t)\}$ und $\beta \approx R_T/2)$..

Somit lässt sich das Empfangssignal $r_{Bus}(t)$ vereinfacht als Zusammensetzung dreier Komponenten schreiben:

$$r_{Bus}(t) = a_1 \, s_{CAN}(t) + a_2 \, s_{HF}(t) + a_3 \, s_{CAN}(t) \times s_{HF}(t) \qquad \ldots(2)$$

Für die weitere Beschreibung wird nun eine Blockverarbeitung angenommen, obwohl alle Teile auch sequentiell verarbeitet werden können.

Für die Übertragung wird angenommen, dass das CAN-Signal $s_{CAN}(t)$ die hier zur einfacheren Darstellung normierten Zustände z entsprechend $s_{CAN}(t) \approx \{0,1\}$ annimmt und es diese Zustände z mit fester Periode bzw. Taktzeit $T_{CAN}$ zufällig wechselt, wie in Fig. 4 dargestellt. Hier ist die Zeit t auf die Taktzeit $T_{CAN}$ bezogen dargestellt. $\Delta T_{CAN}$ stellt einen beliebigen zeitlichen Offset zwischen Sender und Empfänger da, welcher im Fig. 4 gezeigten Bespiel bei $t/T_{CAN}=3$ liegt. Diese Stelle entspricht gleichzeitig dem Wert 0 des Zeitindexes i, der im Folgenden die Perioden des CAN-Signals bezeichnet, wie aus der später angegeben Gleichung (3) hervorgeht.

Weiterhin wird die mittlere Leistung $E\{|s_{HF}(t)|^2\}$ des mittelwertfreien Signals $s_{HF}(t)$ willkürlich mit Eins angenommen: $E\{s_{HF}(t)\} = 0$, $E\{|s_{HF}(t)|^2\}=1$.

Aus diesen Annahmen gilt es nun die Faktoren bzw. Koeffizienten $a_1$, $a_2$ und $a_3$ des Empfangssignals $r_{Bus}(t)$ zu schätzen und eine Kompensation des Terms $a_3 \, s_{CAN}(t) \times s_{HF}(t)$ in dem Emfangssignal $r_{Bus}(t)$ anzustreben. Der Term $a_3 \, s_{CAN}(t) \times s_{HF}(t)$ stellt die Störung in dem Empfangssignal $r_{Bus}(t)$ dar, die aufgrund der wechselnden Ausgangsimpedanz $R_{OUT}(t)$ der Teilnehmerstation 8 entsteht.

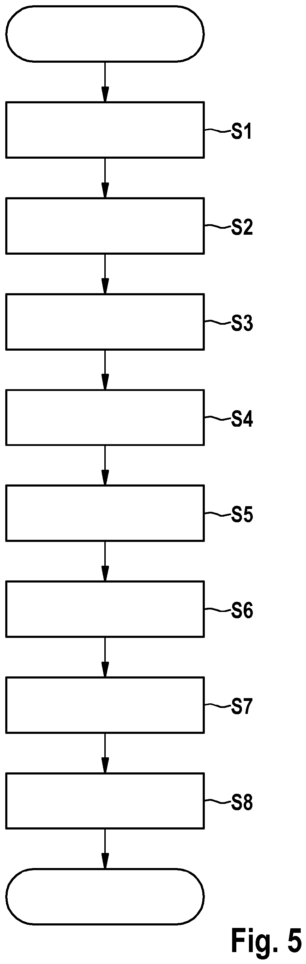

Fig. 5 zeigt schematisch den Ablauf eines Verfahrens, welches bei der Empfangseinheit 20 abläuft und ein Verfahren zur Kompensation von Störungen in dem Bussignal bzw. dem Empfangssignal $r_{Bus}(t)$ aufgrund des CAN-Bussystems 2 umfasst, in welchem das CAN-Signal $s_{CAN}(t)$ übertragen wird.

Demzufolge wird nach einem Start des Verfahrens bei einem Schritt S1 ein Signal des weiteren Bussystems 3, das Empfangssignal $r_{Bus}(t)$, von der Empfangseinheit 20 empfangen. Dieses Signal umfasst das Signal 5 und eine Störung aufgrund der wechselnden Ausgangsimpedanz $R_{OUT}(t)$ der Teilnehmerstation 8. Danach geht der Fluss zu einem Schritt S2 weiter, bei welchem das Verfahren zur Kompensation der Störung beginnt.

Bei dem Schritt S2 wird von der Taktschätzeinrichtung 21 der Zeittakt $T_{CAN}$ des CAN-Signals $s_{CAN}(t)$ geschätzt. Danach geht der Fluss zu einem Schritt S3 weiter.

Bei dem Schritt S3 erfasst die Erfassungseinrichtung 22 die Zustände z (vgl. auch Fig. 4) des CAN-Signals $s_{CAN}(t)$ zum jeweiligen Zeitindex i. Hierbei gilt für die Zeit t die folgende Gleichung

$$t = i \, T_{CAN} + \Delta T_{CAN}, \qquad \ldots(3)$$

wie in Fig. 4 gezeigt. Die Zustände sind entweder 0 oder 1, wie zuvor angegeben. Danach geht der Fluss zu einem Schritt S4 in Fig. 5 weiter.

Bei dem Schritt S4 bildet die Nachbildungseinrichtung 23 das hypothetisch gesendete CAN-Signal $s'_{CAN}(t) \in \{0,1\}$ nach. Danach geht der Fluss zu einem Schritt S5 weiter.

Bei dem Schritt S5 schätzt die Wertschätzeinrichtung 24 Werte $e_1$, $e_2$, $e_3$. Dies erfolgt im Bereich des jeweiligen Zustands des CAN-Signals $s_{CAN}(t)$ als Randbedingung. Hierbei gilt

$$e_1 = E\left\{|r_{Bus}(t)|^2\,|\,s'_{CAN}(t) = 0\right\}$$

$$e_2 = E\left\{|r_{Bus}(t)|\,|\,s'_{CAN}(t) = 1\right\}$$

$$e_3 = E\left\{|r_{Bus}(t)|^2\,|\,s'_{CAN}(t) = 1\right\}$$

Danach geht der Fluss zu einem Schritt S6 weiter.

Bei dem Schritt S6 bestimmt die Bestimmungseinrichtung 25 Koeffizienten $a_3'$, $a_2'$, $a_1'$ entsprechend der folgenden Vorschrift. Die Koeffizienten $a_3'$, $a_2'$, $a_1'$ sind nachfolgend auch vorbestimmte Koeffizienten genannt und sind Schätzwerte der Faktoren $a_3$, $a_2$, $a_1$ des auf der Busleitung 4, genauer gesagt dem weiteren Bussystem 3, übertragenen Signals, das als Empfangssignal $r_{Bus}(t)$ bei der Empfangseinheit 20 empfangen wird. Hierbei gilt:

-

$$a_3' = sqrt(e_1)$$

-

$$a_2' = e_2$$

-

$$a_1' = sqrt(e_3 - a_2^2) - a_3$$

Hierbei steht "sqrt(...)" für die Quadratwurzel aus dem Term in der Klammer. Danach geht der Fluss zu einem Schritt S7 weiter.

Bei dem Schritt S7 kompensiert die Kompensationseinrichtung 26 den Anteil des CAN-Signals $s_{CAN}(t)$ in dem Signal des weiteren Bussystems 3, das heißt dem Empfangssignal $r_{Bus}(t)$. Das resultierende Signal $r_{Bus}'(t)$ stellt eine Rekonstruktion des Signals des weiteren Bussystems 3, des Signals $s_{HF}(t)$, dar, so dass dieses mit den üblichen Empfangsverfahren verarbeitet werden kann:

$$r_{Bus}'(t) = (r_{Bus}(t) - a_1'\,s'_{CAN}(t)) / (a_2' + a_3'\,s'_{CAN}(t))$$
$$= (r_{Bus}(t) - a_1'\,s'_{CAN}(t)) \times (a_2' - a_3'\,s'_{CAN}(t)) / (a_2'^2 + a_3'^2)\ \ ...(3)$$

Danach ist das Verfahren zur Kompensation beendet, wobei der Fluss zu einem Schritt S8 weitergeht.

Bei dem Schritt S8 leitet die Empfangseinheit 20 das resultierende Signal $r_{Bus}'(t)$, gegebenenfalls nach einer weiteren für das weitere Bussystem 3 üblichen Verarbeitung, an die Kommunikationssteuereinheit 10 weiter. Danach ist das Verfahren beendet.

Bei dem zuvor beschriebenen Verfahren kann die Taktschätzung bei Schritt S1 beispielsweise mittels Signalangepasstes Filter (Matched-Filter) durchgeführt werden, bei welchem Empfangs- und Sendefilter angepasst sind. Hierbei wird eine rechteckige Impulsantwort der Dauer bzw. mit dem Zeittakt $T_{CAN}$ angenommen, wobei diese Dauer zuerst mit Standardwerten der verwendeten Impulsform voreingestellt wird. Die Standardwerte sind beispielsweise die Flanken, Amplituden (Minimum und Maximum), Zeittakt, usw. der Impulsform. Über festgestellte Maxima und Minima innerhalb einer Verarbeitung eines Nachrichtenblockes einer Nachricht, auf welcher das Signal 5 basiert, wird dann ein Flankenmittelwert festgelegt und die Schnittpunkte mit dem Ausgangssignal des Signal-angepassten Filters (Matched-Filter Ausgangssignal) als zeitliche Referenzpunkte verwendet. Hieraus kann der exakte Wert $T_{CAN}$ als auch die zeitliche Lage der CAN-Zustandswechsel bestimmt werden, was anschließend bei Schritt S2 vorgenommen wird.

Das heißt, bei Schritt S2 können auf Basis des Ausgangssignals des Signal-angepassten Filters und der zeitlichen Lage der CAN-Zustandswechsel die CAN-Zustände z erfasst werden.

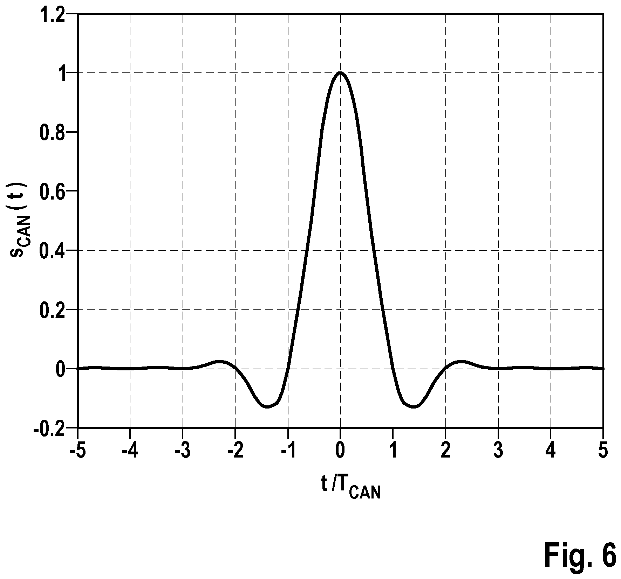

Gemäß einem zweiten Ausführungsbeispiel kann die Nachbildungseinrichtung 23 bei dem Schritt S3 das Signal nicht auf Basis von rechteckigen sondern mit Hilfe eines Cosinus-roll-off-Filters (von "raised-cosine" Flanken) nachbilden, wie in Fig. 6 gezeigt. Diese besitzen gute spektrale Eigenschaften und äußern sich besonders bei einer Multiplikation, wie sie später bei dem Schritt S6 durch die Kompensationseinrichtung 26 durchgeführt wird, im Zeitbereich vorteilhaft. In ähnlicher Weise ist eine direkte Optimierung der Flanken des hypothetischen Sendesignals $s'_{CAN}(t)$ möglich, so dass statt der rechteckigen Pulse auch Pulsformen mit beliebigen, auch Trapez- und Cosinus-förmigen, usw., Übergängen eingesetzt werden können. Dadurch kann die Robustheit des durch die Empfangseinheit 20 durchgeführten Verfahrens gegenüber Fehlern in der Taktschätzung durch die Taktschätzeinrichtung bei Schritt S1 und eine Rekonstruktion der Referenzpunkte bei dem Schritt S4 verbessert werden.

Ansonsten ist das zweite Ausführungsbeispiel auf die gleiche Weise aufgebaut, wie bei dem ersten Ausführungsbeispiel beschrieben.

Alle zuvor beschriebenen Ausgestaltungen des Systems 1, insbesondere der Teilnehmerstationen 7, 8, und des Verfahrens können einzeln oder in allen möglichen Kombinationen Verwendung finden. Insbesondere können Merkmale und/oder Funktionen des ersten und zweiten Ausführungsbeispiels beliebig kombiniert sein. Zusätzlich sind insbesondere folgende Modifikationen denkbar.

Das zuvor beschriebene CAN-Bussystem 2 gemäß dem ersten und zweiten Ausführungsbeispiel ist anhand eines auf dem CAN-Protokoll basierenden Bussystems beschrieben. Das CAN-Bussystem 2 gemäß dem ersten und zweiten Ausführungsbeispiel kann jedoch auch eine andere Art von Kommunikationsnetz sein. Es ist möglich, jedoch nicht zwangsläufige Voraussetzung, dass bei dem Bussystem 2 zumindest für bestimmte Zeitspannen ein exklusiver, kollisionsfreier Zugriff einer Teilnehmerstation 8 auf einen gemeinsamen Kanal gewährleistet ist.

Das CAN-Bussystem 2 gemäß dem ersten und zweiten Ausführungsbeispiel ist insbesondere ein CAN-Netzwerk oder ein TTCAN-Netzwerk (TTCAN = Time Triggered Controller Area Network = zeitgesteuertes CAN), bei welchem auf das vorhandene CAN eine Zeitsteuerung aufgesetzt ist, oder ein CAN FD-Netzwerk (CAN mit Flexible Data-Rate = CAN mit flexibler Datenrate), bei welchem die Datenrate flexibel wählbar ist und Nachrichten entsprechend Spezifikation "CAN with Flexible Data-Rate,Specification Version 1.0" (Quelle http://www.semiconductors.bosch.de) übertragen werden.

Die Anzahl und Anordnung der Teilnehmerstationen 7, 8 in den Bussystemen 2, 3 der Busleitung 4 des ersten und zweiten Ausführungsbeispiels ist beliebig. Zudem kann auch eine Teilnehmerstation vorhanden sein, die sowohl Signale des CAN-Bussystems 2 als auch des weiteren Bussystems 3 empfangen und verarbeiten kann. Die Empfangseinheiten 20, 82 können jeweils auch als Sende-/Empfangseinheiten ausgestaltet sein, welche Signale senden und empfangen können.

Die Empfangseinheit 20 kann derart ausgestaltet sein, dass sie das Verfahren zur Kompensation gemäß den zuvor beschriebenen Schritten S2 bis S7 von Fig. 5 nur ausführt, wenn eine Übertragung mit dem CAN-Bussystem 2 auf der Busleitung stattfindet und damit eine wechselnde Ausgangsimpedanz $R_{OUT}(t)$ vorhanden ist.

Sofern die Pulsform der Sende-/Empfangseinheit 82, die auch CAN-Transceiver genannt werden kann, der Teilnehmerstation 8 stark von einem Rechteck abweicht, ist es möglich, bei dem Schritt S3 des von der Empfangseinheit 20 durchgeführten Verfahrens die Basissignalform an sich statt nur der Flanken anzupassen. Demzufolge können auch die Amplituden usw. angepasst werden.

Alternativ zu den zuvor genannten Möglichkeiten für eine Taktschätzung bei dem Schritt S1 des von der Empfangseinheit 20 durchgeführten Verfahrens und/oder für eine Erfassung der CAN-Zustände bei dem Schritt S2 des von der Empfangseinheit 20 durchgeführten Verfahrens ist es möglich, bestehende bzw. bekannte Verfahren der Taktsynchronisation und existierende Empfangstechniken zu verwenden und die notwendigen Parameter an den mit den weiteren Schritten S3 bis S4 durchgeführten Kompensationsalgorithmus zu liefern. Die vorliegende Erfindung ist ausschließlich durch die angehängten Ansprüche definiert und wird nur durch deren Umfang limitiert.

## Patentansprüche

1. Teilnehmerstation (7) zum Anschluss an eine Busleitung (4),
   wobei die Teilnehmerstation (7) dazu eingerichtet ist, ein Signal (5) eines CAN-Bussystems (2) in Koexistenz zu einem Signal (6) eines weiteren Bussystems (3) über die Busleitung (4) zu übertragen, wobei die Teilnehmerstation (7) umfasst:

   eine Empfangseinheit (20) zum Empfang eines Signals ($r_{Bus}(t)$) des weiteren Bussystems (3) und zur Kompensation einer Störung in dem empfangenen Signal ($r_{Bus}(t)$), die aufgrund einer wechselnden Ausgangsimpedanz ($R_{OUT}(t)$) einer anderen an die Busleitung (4) angeschlossenen Teilnehmerstation (8) des CAN-Bussystems (3) entsteht,
   wobei $r_{Bus}(t)$ durch $r_{Bus}(t) = a_1\, s_{CAN}(t) + a_2\, s_{HF}(t) + a_3\, s_{CAN}(t) \times s_{HF}(t)$ gegeben ist,
   wobei $s_{CAN}(t)$ das Signal der anderen an die Busleitung (4) angeschlossenen Teilnehmerstation (8) ist, $s_{HF}(t)$ das Signal der Teilnehmerstation (7) ist, und $a_1$, $a_2$ und $a_3$ Faktoren des Signals $r_{Bus}(t)$ sind, und die Signalkomponente $a_3\, s_{CAN}(t) \times s_{HF}(t)$ die Störung darstellt,
   wobei die Empfangseinheit eine Bestimmungseinrichtung (25) zur Bestimmung von vorbestimmten Koeffizienten $a_1'$, $a_2'$, und $a_3'$ für das von der Empfangseinheit (20) empfangene Signal $r_{Bus}(t)$ aufweist,
   wobei die vorbestimmten Koeffizienten $a_1'$, $a_2'$, und $a_3'$ Schätzwerte der Faktoren $a_1$, $a_2$ und $a_3$ sind, und
   wobei die Empfangseinheit eine Kompensationseinrichtung (26) zur Kompensation des Anteils des empfangenen CAN-Signals $s_{CAN}(t)$ in dem Signal des weiteren Bussystems (3) unter Verwendung der vorbestimmten

Koeffizienten $a_1'$, $a_2'$, und $a_3'$ aufweist.

2. Teilnehmerstation (7) nach Anspruch 1, wobei die Empfangseinheit (20) weiter umfasst:

eine Taktschätzeinrichtung (21) zur Schätzung eines Zeittaktes ($T_{CAN}$) des CAN-Signals ($s_{CAN}(t)$) in dem von der Empfangseinheit (20) empfangenen Signal ($r_{Bus}(t)$),
eine Erfassungseinrichtung (22) zur Erfassung der Zustände (z) des CAN-Signals ($s_{CAN}(t)$) je Zeittakt ($T_{CAN}$) oder je Periode oder Zeitindex (i),
eine Nachbildungseinrichtung (23) zur Nachbildung eines hypothetisch gesendeten CAN-Signals ($s'_{CAN}(t)$),
eine Wertschätzeinrichtung (24) zur Schätzung von Werten e1, e2, und
e3 im Bereich des jeweiligen Zustands (z) des CAN-Signals ($s_{CAN}(t)$) als Randbedingung,
wobei die vorbestimmten Koeffizienten $a_1'$, $a_2'$, und $a_3'$ aus den Werten e1, e2, und e3 errechnet werden.

3. Teilnehmerstation (7) nach Anspruch 2, wobei die Taktschätzeinrichtung (21) zur Schätzung des Zeittaktes des CAN-Signals ($s_{CAN}(t)$) mittels Signal-angepasstem Filter ausgestaltet ist.

4. Teilnehmerstation (7) nach Anspruch 3, wobei anstelle des Signal-angepassten Filters ein Filter mit beliebiger Impulsantwort verwendet wird, welches zuvor mit einer an die Übertragung angepassten Impulsform voreingestellt wird

5. Teilnehmerstation (7) nach Anspruch 3, wobei das Signal-angepasste Filter zur Verwendung einer rechteckigen Impulsantwort oder einer Impulsantwort eines Cosinus-roll-off-Filters entsprechend einer Symboldauer ausgestaltet ist, welche zuvor mit Standardwerten der verwendeten Impulsform voreingestellt wird.

6. Teilnehmerstation (7) nach Anspruch 5, wobei das Signal-angepasste Filter über festgestellte Maxima und Minima innerhalb einer Verarbeitung eines Nachrichtenblockes zur Festlegung eines Flankenmittelwerts und zur Verwendung der Schnittpunkte mit dem Ausgangssignal des Signal-angepassten Filters als zeitliche Referenzpunkte ausgestaltet ist.

7. Teilnehmerstation (7) nach einem der Ansprüche 2 bis 6, wobei die Erfassungseinrichtung (22) zur Erfassung der Zustände des CAN-Signals ($s_{CAN}(t)$) auf der Grundlage eines Ausgangssignals eines Signal-angepassten Filters und einer zeitlichen Lage der Wechsel der Zustände des CAN-Signals ($s_{CAN}(t)$) ausgestaltet ist.

8. System (1), mit
einer Busleitung (4),

einer ersten Teilnehmerstation (7) nach einem der vorangehenden Ansprüche, die an die Busleitung (4) angeschlossen ist, und
einer zweiten Teilnehmerstation (8) zum Senden von Signalen gemäß dem CAN-Protokoll über die Busleitung (4) und die der anderen Teilnehmerstation (8) in Anspruch 1 entspricht.

9. Verfahren zur Kompensation einer Störung aufgrund eines CAN-Bussystems (2) in einem Empfangssignal ($r_{Bus}(t)$), wobei das CAN-Bussystem (2) ein Signal (5) in Koexistenz zu einem Signal (6) eines weiteren Bussystems (3) auf einer Busleitung (4) überträgt, mit den Schritten
Empfangen (S1), mit einer Empfangseinheit (20), des Signals $r_{Bus}(t)$ des weiteren Bussystems (3),Schätzung (S2) des Zeittaktes ($T_{CAN}$) des CAN-Signals $s_{CAN}(t)$ in dem bei dem Empfangsschritt (S1) empfangenen Signal $r_{Bus}(t)$, wobei $r_{Bus}(t)$ durch $r_{Bus}(t) = a_1 s_{CAN}(t) + a_2 s_{HF}(t) + a_3 s_{CAN}(t) \times s_{HF}(t)$ gegeben ist,
wobei $s_{CAN}(t)$ das Signal einer anderen an die Busleitung (4) angeschlossenen Teilnehmerstation (8) ist, $s_{HF}(t)$ das Signal der Teilnehmerstation (7) ist, und $a_1$, $a_2$ und $a_3$ Faktoren des Signals $r_{Bus}(t)$ sind, und die Signalkomponente $a_3 s_{CAN}(t) \times s_{HF}(t)$ die Störung darstellt,
Erfassung (S3) der Zustände (z) des empfangenen CAN-Signals $s_{CAN}(t)$ je Zeittakt ($T_{CAN}$),
Nachbildung (S4) des Anteils des empfangenen CAN-Signals $s_{CAN}(t)$, Schätzung (S5) von Werten e1, e2, und e3 im Bereich des jeweiligen Zustands (z) des CAN-Signals ($s_{CAN}(t)$) als Randbedingung, Bestimmung (S6) von vorbestimmten Koeffizienten $a_1'$, $a_2'$, und $a_3'$ für das von der Empfangseinheit (20) empfangene Signal ($r_{Bus}(t)$),
wobei die vorbestimmten Koeffizienten $a'_1$ $a'_2$ und $a'_3$ aus den Werten e1, e2, und e3 errechnet werden,
wobei die vorbestimmten Koeffizienten $a'_1$, $a'_2$, und $a'_3$ Schätzwerte der Faktoren $a_1$, $a_2$ und $a_3$ sind, und
Kompensation (S7) des Anteils des empfangenen CAN-Signals ($s_{CAN}(t)$) unter Verwendung der vorbestimmten Koeffizienten $a_1'$, $a_2'$, und $a_3'$ in dem Signal des weiteren Bussystems (3).

**Claims**

1.  Subscriber station (7) for connection to a bus line (4),
    wherein the subscriber station (7) is configured to transmit a signal (5) of a CAN bus system (2) in coexistence with a signal (6) of a further bus system (3) via the bus line (4), wherein the subscriber station (7) comprises:

    a receiving unit (20) for receiving a signal ($r_{Bus}(t)$) of the further bus system (3) and for compensating for a disturbance in the received signal ($r_{Bus}(t)$) that arises on account of a changing output impedance ($R_{OUT}(t)$) of another subscriber station (8) of the CAN bus system (3) that is connected to the bus line (4),
    wherein $r_{Bus}(t)$ is provided by $r_{Bus}(t) = a_1 S_{CAN}(t) + a_2 S_{HF}(t) + a_3 S_{CAN}(t) \times S_{HF}(t)$,
    wherein $S_{CAN}(t)$ is the signal of the other subscriber station (8) connected to the bus line (4), $s_{HF}(t)$ is the signal of the subscriber station (7) and $a_1$, $a_2$ and $a_3$ are factors of the signal $r_{Bus}(t)$, and the signal component $a_3 s_{CAN}(t) \times S_{HF}(t)$ represents the disturbance,
    wherein the receiving unit has a determining device (25) for determining predetermined coefficients $a_1'$, $a_2'$ and $a_3'$ for the signal $r_{Bus}(t)$ received by the receiving unit (20),
    wherein the predetermined coefficients $a_1'$, $a_2'$ and $a_3'$ are estimates of the factors $a_1$, $a_2$ and $a_3$, and
    wherein the receiving unit has a compensating device (26) for compensating for the component of the received CAN signal $S_{CAN}(t)$ in the signal of the further bus system (3) by using the predetermined coefficients $a_1'$, $a_2'$ and $a_3'$.

2.  Subscriber station (7) according to Claim 1, wherein the receiving unit (20) further comprises:

    a clock estimation device (21) for estimating a timing clock pulse ($T_{CAN}$) of the CAN signal ($S_{CAN}(t)$) in the signal ($r_{Bus}(t)$) received by the receiving unit (20),
    a detection device (22) for detecting the states (z) of the CAN signal ($S_{CAN}(t)$) per timing clock pulse ($T_{CAN}$) or per period or time index (i),
    a replication device (23) for replicating a hypothetically transmitted CAN signal ($s'_{CAN}(t)$),
    a value estimation device (24) for estimating values e1, e2 and e3 in the region of the respective state (z) of the CAN signal ($s_{CAN}(t)$) as a constraint,
    wherein, the predetermined coefficients $a_1'$, $a_2'$ and $a_3'$ are calculated from the values e1, e2 and e3.

3.  Subscriber station (7) according to Claim 2, wherein the clock estimation device (21) for estimating the timing clock pulse of the CAN signal ($s_{CAN}(t)$) is formed by means of signal-matched filter.

4.  Subscriber station (7) according to Claim 3, wherein instead of the signal-matched filter a filter having any impulse response is used that is preset beforehand with an impulse shape matched to the transmission.

5.  Subscriber station (7) according to Claim 3, wherein the signal-matched filter is designed to use a square impulse response or an impulse response of a cosine roll-off filter in accordance with a symbol duration that is preset beforehand with standard values of the impulse shape used.

6.  Subscriber station (7) according to Claim 5, wherein the signal-matched filter is designed, using determined maxima and minima within a processing of a message block, to stipulate an edge mean value and to use the intersections with the output signal of the signal-matched filter as temporal reference points.

7.  Subscriber station (7) according to one of Claims 2 to 6, wherein the detection device (22) is designed to detect the states of the CAN signal ($s_{CAN}(t)$) on the basis of an output signal of a signal-matched filter and a position in time of the changes of the states of the CAN signal ($s_{CAN}(t)$).

8.  System (1) having
    a bus line (4),
    a first subscriber station (7) according to one of the preceding claims, which is connected to the bus line (4), and
    a second subscriber station (8) for transmitting signals in accordance with the CAN protocol via the bus line (4) and corresponding to the other subscriber station (8) in Claim 1.

9.  Method for compensating for a disturbance on account of a CAN bus system (2) in a received signal ($r_{Bus}(t)$),
    wherein the CAN bus system (2) transmits a signal (5) in coexistence with a signal (6) of a further bus system (3) on a bus line (4), having the steps of

receiving (S1), by means of a receiving unit (20), the signal $r_{Bus}(t)$ of the further bus system (3), estimating (S2) the timing clock pulse ($T_{CAN}$) of the CAN signal $S_{CAN}(t)$ in the signal $r_{Bus}(t)$ received in the receiving step (S1), wherein $r_{Bus}(t)$ is provided by $r_{Bus}(t) = a_1 S_{CAN}(t) + a_2 S_{HF}(t) + a_3 S_{CAN}(t) \times S_{HF}(t)$, wherein $s_{CAN}(t)$ is the signal of another subscriber station (8) connected to the bus line (4), $s_{HF}(t)$ is the signal of the subscriber station (7), and $a_1$, $a_2$ and $a_3$ are factors of the signal $r_{Bus}(t)$, and the signal component $a_3 S_{CAN}(t) \times S_{HF}(t)$ represents the disturbance, detecting (S3) the states (z) of the received CAN signal $S_{CAN}(t)$ per timing clock pulse ($T_{CAN}$), replicating (S4) the component of the received CAN signal $S_{CAN}(t)$, estimating (S5) values e1, e2 and e3 in the region of the respective state (z) of the CAN signal ($s_{CAN}(t)$) as a constraint, determining (S6) predetermined coefficients $a_1'$, $a_2'$ and $a_3'$ for the signal ($r_{Bus}(t)$) received by the receiving unit (20), wherein the predetermined coefficients $a'_1$, $a'_2$ and $a'_3$ are calculated from the values e1, e2 and e3, wherein the predetermined coefficients $a'_1$, $a'_2$ and $a'_3$ are estimates of the factors $a_1$, $a_2$, $a_3$, and compensating (S7) for the component of the received CAN signal ($s_{CAN}(t)$) by using the predetermined coefficients $a_1'$, $a_2'$ and $a_3'$ in the signal of the further bus system (3).

**Revendications**

1. Station d'abonné (7) destinée à être raccordée à une ligne de bus (4), la station d'abonné (7) étant conçue pour transmettre par le biais de la ligne de bus (4) un signal (5) d'un système de bus CAN (2) en coexistence avec un signal (6) d'un système de bus supplémentaire (3), la station d'abonné (7) comprenant :

   une unité de réception (20) destinée à recevoir un signal ($r_{Bus}(t)$) du système de bus supplémentaire (3) et à compenser une perturbation dans le signal ($r_{Bus}(t)$) reçu, qui se produit en raison d'une impédance de sortie ($R_{OUT}(t)$) variable d'une autre station d'abonné (8) du système de bus CAN (3) qui est raccordée à la ligne de bus (4),
   $r_{Bus}(t)$ étant donné par $r_{Bus}(t) = a_1 s_{CAN}(t) + a_2 sHF(t) + a_3 s_{CAN}(t) \times s_{HF}(t)$,
   $s_{CAN}(t)$ désignant le signal de l'autre station d'abonné (8) qui est raccordée à la ligne de bus (4), $s_{HF}(t)$ le signal de la station d'abonné (7) et $a_1$, $a_2$ et $a_3$ des facteurs du signal $r_{Bus}(t)$, et la composante de signal $a_3 s_{CAN}(t) \times S_{HF}(t)$ représentant la perturbation,
   l'unité de réception possédant un dispositif de détermination (25) destiné à déterminer des coefficients prédéterminés $a_1'$, $a_2'$ et $a_3'$ pour le signal $r_{Bus}(t)$ reçu par l'unité de réception (20),
   les coefficients prédéterminés $a_1'$, $a_2'$ et $a_3'$ étant des valeurs estimées des facteurs $a_1$, $a_2$ et $a_3$, et
   l'unité de réception possédant un dispositif de compensation (26) destiné à compenser la part du signal CAN $s_{CAN}(t)$ reçu en utilisant les coefficients prédéterminés $a_1'$, $a_2'$ et $a_3'$ dans le signal du système de bus supplémentaire (3).

2. Station d'abonné (7) selon la revendication 1, l'unité de réception (20) comprenant en outre :

   un dispositif d'estimation de cycle (21) destiné à estimer un cycle temporel ($T_{CAN}$) du signal CAN ($s_{CAN}(t)$) dans le signal ($r_{Bus}(t)$) reçu par l'unité de réception (20),
   un dispositif de détection (22) destiné à détecter les états (z) du signal CAN ($s_{CAN}(t)$) à chaque cycle temporel ($T_{CAN}$) ou à chaque période ou indice temporel (i),
   un dispositif de simulation (23) destiné à simuler un signal CAN ($s'_{CAN}(t)$) émis hypothétiquement,
   un dispositif d'estimation de valeur (24) destiné à estimer des valeurs e1, e2 et e3 dans la plage de l'état (z) respectif du signal CAN ($s_{CAN}(t)$) en tant que condition limite,
   les coefficients prédéterminés $a_1'$, $a_2'$ et $a_3'$ étant calculés à partir des valeurs e1, e2 et e3.

3. Station d'abonné (7) selon la revendication 2, le dispositif d'estimation de cycle (21) destiné à estimer le cycle temporel ($T_{CAN}$) du signal CAN ($s_{CAN}(t)$) étant configuré au moyen d'un filtre adapté au signal.

4. Station d'abonné (7) selon la revendication 3, un filtre ayant une réponse impulsionnelle quelconque étant utilisé à la place du filtre adapté au signal, lequel est préalablement préréglé avec une forme d'impulsion adaptée à la transmission.

5. Station d'abonné (7) selon la revendication 3, le filtre adapté au signal étant configuré en utilisant une réponse impulsionnelle rectangulaire ou une réponse impulsionnelle d'un filtre à coupure progressive cosinusoïdale conformément à une durée de symbole, lequel est préalablement préréglé avec des valeurs standard de la forme d'impulsion utilisée.

6. Station d'abonné (7) selon la revendication 5, le filtre adapté au signal étant configuré par le biais de maximums et de minimums définis au sein d'un traitement d'un bloc de message destiné à fixer une valeur moyenne de front et à utiliser les points d'intersection avec le signal de sortie du filtre adapté au signal en tant que points de référence temporels.

7. Station d'abonné (7) selon l'une des revendications 2 à 6, le dispositif de détection (22) étant configuré pour détecter les états (z) du signal CAN ($s_{CAN}(t)$) sur la base d'un signal de sortie d'un filtre adapté au signal et d'une position dans le temps du changement des états du signal CAN ($s_{CAN}(t)$).

8. Système (1), comprenant
une ligne de bus (4),
une première station d'abonné (7) selon l'une des revendications précédentes, qui est raccordée à la ligne de bus (4), et
une deuxième station d'abonné (8) destinée à émettre des signaux selon le protocole CAN par le biais de la ligne de bus (4) et qui correspond à l'autre station d'abonné (8) dans la revendication 1.

9. Procédé de compensation d'une perturbation en raison d'un système de bus CAN (2) dans un signal reçu ($r_{Bus}(t)$), le système de bus CAN (2) transmettant un signal (5) en coexistence avec un signal (6) d'un système de bus supplémentaire (3) sur une ligne de bus (4), comprenant les étapes suivantes :

réception (S1), avec une unité de réception (20), du signal $r_{Bus}(t)$ du système de bus supplémentaire (3),
estimation (S2) du cycle temporel ($T_{CAN}$) du signal CAN $S_{CAN}(t)$ dans le signal $r_{Bus}(t)$ reçu lors de l'étape de réception (S1),
$r_{Bus}(t)$ étant donné par $rBus(t) = a_1 s_{CAN}(t) + a_2 s_{HF}(t) + a_3 s_{CAN}(t) \times s_{HF}(t)$,
$s_{CAN}(t)$ désignant le signal d'une autre station d'abonné (8) qui est raccordée à la ligne de bus (4), $s_{HF}(t)$ le signal de la station d'abonné (7) et $a_1$, $a_2$ et $a_3$ des facteurs du signal $r_{Bus}(t)$, et la composante de signal $a_3 sCAN(t) \times S_{HF}(t)$ représentant la perturbation,
détection (S3) des états (z) du signal CAN $s_{CAN}(t)$ reçu à chaque cycle temporel ($T_{CAN}$),
simulation (S4) de la part du signal CAN $s_{CAN}(t)$ reçu,
estimation (S5) de valeurs e1, e2 et e3 dans la plage de l'état (z) respectif du signal CAN ($s_{CAN}(t)$) en tant que condition limite,
détermination (S6) de coefficients prédéterminés $a_1'$, $a_2'$ et $a_3'$ pour le signal ($r_{Bus}(t)$) reçu par l'unité de réception (20),
les coefficients prédéterminés $a'_1$, $a'_2$ et $a'_3$ étant calculés à partir des valeurs e1, e2 et e3,
les coefficients prédéterminés $a'_1$, $a'_2$ et $a'_3$ étant des valeurs estimées, des facteurs $a_1$, $a_2$ et $a_3$, et
compensation (S7) de la part du signal CAN ($s_{CAN}(t)$) reçu en utilisant les coefficients prédéterminés $a_1'$, $a_2'$ et $a_3'$ dans le signal du système de bus supplémentaire (3).

Fig. 1

EP 2 918 056 B1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10301637 A1

- WO 2012038472 A1